(19) Europäisches Patentamt
European Patent Office
Office européen des brevets

(11) EP 0 698 259 B1

## (12) EUROPEAN PATENT SPECIFICATION

(45) Date of publication and mention
of the grant of the patent:
**06.11.1996 Bulletin 1996/45**

(21) Application number: **94915369.6**

(22) Date of filing: **11.04.1994**

(51) Int Cl.$^6$: **G06T 15/50**

(86) International application number:
**PCT/US94/03982**

(87) International publication number:
**WO 95/06298 (02.03.1995 Gazette 1995/10)**

(54) **OBJECT ORIENTED SHADING**

OBJEKTORIENTIERTE SCHRAFFIERUNG

OMBRAGE ORIENTE OBJET

(84) Designated Contracting States:
**DE FR GB IT**

(30) Priority: **24.08.1993 US 111241**

(43) Date of publication of application:
**28.02.1996 Bulletin 1996/09**

(73) Proprietor: **TALIGENT, INC.**
**Cupertino, CA 95014 (US)**

(72) Inventors:
• **HO, Hsuen-Chung**
**Cupertino, CA 95014 (US)**
• **HOWARD, Maire, A.**
**San Jose, CA 95125 (US)**
• **MARSH, Donald, M.**
**Mountain View, CA 94043 (US)**
• **PETERSON, John**
**Menlo Park, CA 94025 (US)**
• **SEIDL, Robert**
**Palo Alto, CA 94303 (US)**
• **WATANABE, Ryoji**
**Cupertino, CA 95014 (US)**

(74) Representative: **Kindermann, Manfred**
**Patentanwalt,**
**Sperberweg 29**
**71032 Böblingen (DE)**

(56) References cited:
**EP-A- 0 314 341**

• **PROCEEDINGS OF GRAPHICS INTERFACE'88,
June 1988, CANADA pages 127 - 137 FLEISCHER
ET AL. 'a modeling testbed'**
• **COMPUTER TECHNOLOGY REVIEW, vol.11,
no.7, June 1991, USA page 6, XP213564
BARBOUR 'shading techniques are improving
realism'**
• **COMPUTER, vol.25, no.10, October 1992, USA
pages 84 - 91, XP320417 EGBERT ET AL.
'application graphics modeling support through
object orientation'**
• **IBM TDB, vol.33, no.6A, November 1990, USA
pages 335 - 337, XP107738 'simulated bas-relief
through bump mapping'**
• **COMPUTER & GRAPHICS, vol.9, no.2, 1985, USA
pages 125 - 138 CAREY ET AL. 'textures for
realistic image synthesis'**

**Description**

**BACKGROUND OF THE INVENTION**

*Field of the Invention*

The present invention generally relates to improvements in calculation and generation of a 3D object in an object oriented environment and more particularly to a method, apparatus and framework for determining the shading of a 3D surface during rendering and which provides a renderer with shading-related objects and options that guide shading calculation. The invention allows an applications developer to selectively choose any shader(s) in a shader framework resident in an object oriented operating system for use with a renderer, with little, if any, modification of the renderer. Alternatively, the applications developer may develop customized shader(s) which override the shader framework in the operating system.

*Description of the Related Art*

In traditional 3D hardware graphics systems, the formula for color (or shading) computation is fixed. As a result, if users desire a different shading quality, they must purchase a different dedicated hardware graphics system. Similarly, the majority of software packages allow only a limited set of shading effects. As a result, users must switch between different software packages to produce a different shading quality. Such practices result in inefficient and inconvenient software development and usage. Further, the shading qualities cannot be customized to the user's particular needs and the software cannot be readily extended as new developments and needs occur.

Fleischer et al, "A Modeling Testbed", PROCEEDINGS OF GRAPHIC INTERFACE '88, 1988, Canada, pages 127-137, discloses a system and method for geometric modeling including arbitrary 3D deformations, boolean operations and shader operations by using concepts of object oriented programming. Objects are represented by the nodes of a modeling graph. At the top of a graph is a Camera node which contains the code for viewing and rendering. Beneath the camera node are several interior nodes which correspond to transformations such as translate and deformations, e.g. bendings, and shader nodes. At the bottom of the graph, the leaves correspond to geometric primitives. Every path through the graph starts from its bottom and terminates at the camera node. Each path describes a part of the an object or scene, and traversing the path gives the transformations that are successively applied to the primitives. All of the paths considered together comprise a complex object or scene which are interpreted by the rendering code to create and display an image. Shading takes place by using a two stage approach in that the results of the first stage, calculated at sample points, are interpolated across an approximating surface and the interpolated values are used at each pixel to complete the second stage of the shading calculation. Color and other relevant information such as diffuse reflectance, reflectance spectra, light sources, etc. are contained in the static parameters of the shader node. Also the color will be evaluated at least once for every non-background pixel in the final image. At each pixel color information is generated with the interpolated vector producing the output color to be displayed. This method and system use a sophisticated shader and a limited and fixed renderer and shader protocol both limiting the extensibility to different types of architecture.

Barbour, "Shading Techniques Are Improving Realism", COMPUTER TECHNOLOGY REVIEW, vol. 11, no. 7, June 1991, Los Angeles, CA, USA, page 6, XP213564, gives a survey on the pixel processing to produce graphic color displays of objects in an improved realism. It explains the basics of rendering techniques by color shading using lighting models which combine different types of reflections, including light components from ambient, diffuse and specular reflections, and considering distance, position and number of the light sources. This prior art does not extent to methods of implementing the rendering and shading operations.

**SUMMARY OF THE INVENTION**

It is therefore an object of the present invention as set forth in the appended claims to provide a shader framework resident in an object oriented operating system which is callable and which includes a plurality of shaders which incorporate a wide range of surface properties and which can be selectively employed with a renderer with minimum interface software development.

In one aspect of the invention, a shader framework is provided for in the operating system for being called for computing shading based on different properties. The shader framework includes a plurality of shader classes and default shader classes which are callable and preferably includes facilities for generating a texture map, a bump map, and a reflection map in the shading model to increase realism. Additionally, shading may be performed with a procedural definition so as to generate images as if objects are made of a real material such as wood or marble. The applications developer freely chooses appropriate shaders in the shader framework according to the trade-offs between speed and image quality. Alternatively, the developer may create custom shaders which override some or all of the properties of the shaders in the shader framework. With the invention, all that is required is to establish the shader and then the renderer invokes the shader.

With the invention, the graphics system provides a clean interface between a rendering routine and a shader, in which little if any modification of a renderer is required when a different shader is used. Thus, the shaders are extremely easy to use and implement. Further, the modification for shaders is minimized whenever a different renderer is used.

The preferred operating system provides sufficient facilities to achieve a basic illumination model. The preferred object oriented operating system also provides many shader utilities to be used as building blocks to construct complicated shaders. Some complicated shading effects can be achieved through multiple shaders arranged in a 'pipeline' fashion or implemented as shader trees.

Thus, with the invention, an object oriented framework is provided for computing 3D shading in which a plurality of default renderer and shader objects are provided. As objects, the preferred operating system includes a default 3D rendering pipeline that converts geometries defined in 3D space to images on an output device. Pipeline elements include objects such as a surface tessellator (which converts a 3D surface to smaller pieces) and a renderer(which displays surfaces based on the visibility and computed colors). Shaders in the shader framework, as mentioned above, that perform image texture mapping, bump mapping, environment mapping, and procedural texture mapping are provided. Each shader in the shader framework has a default reflectance shader that implements the local illumination shading models. Utilities for creating various maps are also provided. The user can choose appropriate shaders with little if any modification of the renderer. Likewise, renderers may be selected with little modification of the shaders when different renderers are used.

## BRIEF DESCRIPTION OF THE DRAWINGS

The foregoing and other objects, aspects and advantages will be better understood from the following detailed description of a preferred embodiment of the invention with reference to the drawings, in which:

Figure 1 is a pictorial diagram showing a general purpose computer system capable of supporting a high resolution graphics display device and a cursor pointing device, such as a mouse, on which the invention may be implemented;

Figure 2 is a block diagram of the general purpose computer system illustrated in Figure 1 showing in more detail the principal elements of a computer system in accordance with a preferred embodiment;

Figure 3 is an illustration of the 3D attribute bundle object for determining the colors of a 3D surface during rendering in accordance with a preferred embodiment;

Figure 4 is an illustration of inside and outside surfaces of an open cylinder in accordance with a preferred embodiment;

Figure 5 illustrates examples of a color space in accordance with a preferred embodiment;

Figure 6 illustrates a relationship between a renderer and a shader in accordance with a preferred embodiment;

Figure 7 is a schematic of the shader object and the default shader hierarchy and illustrates implementation of the shader in accordance with a preferred embodiment;

Figure 8 illustrates shading variable initialized by the renderer in accordance with a preferred embodiment;

Figure 9 illustrates symbols used in shading equations in accordance with a preferred embodiment;

Figure 10 illustrates light objects employed by the preferred operating system in accordance with a preferred embodiment;

Figure 11 illustrates a default shader equation used by a TReflectanceShader class in accordance with a preferred embodiment;

Figure 12 is a diagram showing the selection of an ObjectColor from fBaseColor of TShadingSample in accordance with a preferred embodiment;

Figure 13 illustrates an example of mapping from screen pixel to a surface and then to the texture map in accordance with a preferred embodiment;

Figure 14 illustrates the relationship between screen pixels, geometry, and a texture map in accordance with a preferred embodiment;

Figure 15 illustrates an approximation of a texture area in accordance with a preferred embodiment;

Figure 16 illustrates an example of bump mapping in accordance with a preferred embodiment;

Figure 17 illustrates old and new normal axes in a bump map in accordance with a preferred embodiment;

Figure 18 is a 2D reflection map and illustrates extending a map from 2D to 3D in accordance with a preferred embodiment;

Figure 19 is a cubic environment map in accordance with a preferred embodiment;

Figure 20 illustrates the preferred operating system's sample procedure maps in accordance with a preferred embodiment;

Figure 21 illustrates a color spline for noise shaders which maps a value to a color in accordance with a preferred embodiment;

Figure 22 is a texture image used for bump mapping in accordance with a preferred embodiment;

Figure 23 illustrate images formed with TBumpMapShader class in accordance with a preferred embodiment;

Figure 24 illustrates TSurfaceShader with marble and wrinkle maps in accordance with a preferred embodiment;

Figure 25 illustrates TSurfaceShader with image and bump maps in accordance with a preferred embodiment; and

Figure 26 is another illustration of TSurfaceShader with image and bump maps in accordance with a preferred embodiment.

## DETAILED DESCRIPTION OF A PREFERRED EMBODIMENT OF THE INVENTION

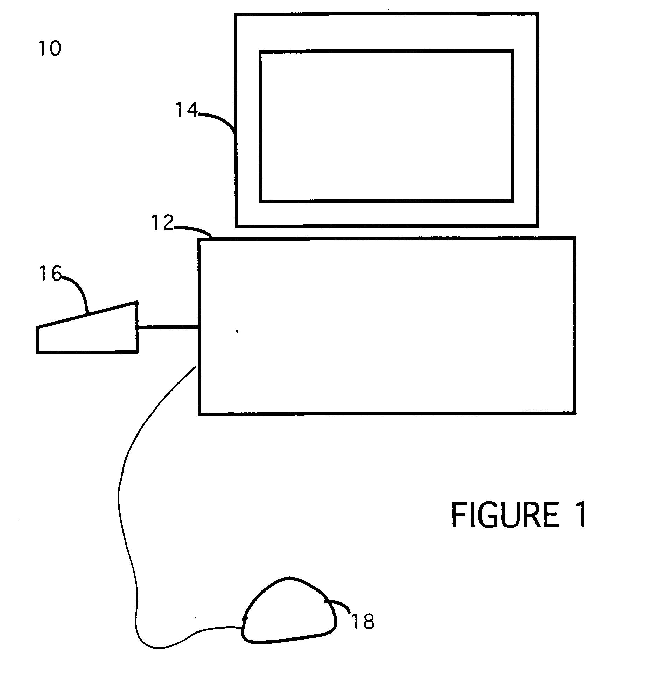

Referring now to the drawings, and more particularly to Figure 1, the invention is preferably for use in the context of an operating system resident on a general purpose computer 10. The computer 10 has a system unit 12 a high resolution display device 14, such as a cathode ray tube (CRT) or, alternatively, a liquid crystal display (LCD). The type of display is not important except that it should be a display capable of the high resolutions required for windowing systems typical of graphic user interfaces (GUIs). User input to the computer is by means of a keyboard 16 and a cursor pointing device, such as the mouse 18. The mouse 18 is connected to the keyboard 16 which, in turn, is connected to the system unit 12. Alternatively, the mouse 18 may be connected to a dedicated or serial port in the system unit 12. Examples of general purpose computers of the type shown in Figure 1 are the Apple Macintosh® (registered trademark of Apple Computer) and the IBM PS/2. Other examples include various workstations such as the IBM RISC System/6000 and the Sun Microsystems computers.

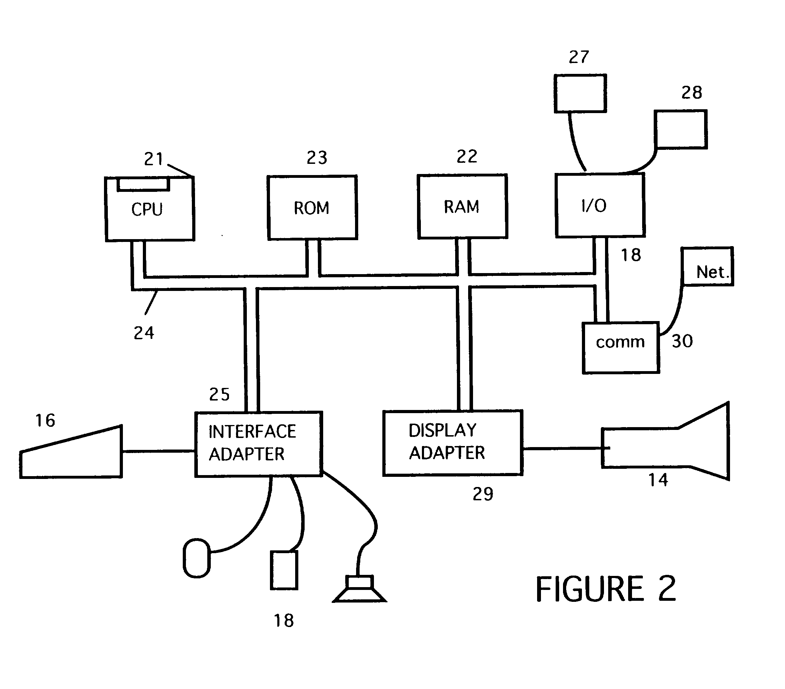

Figure 2 illustrates in more detail the principle elements of the general purpose computer system shown in Figure 1. The system unit 12 includes a central processing unit (CPU) 21, random access memory (RAM) 22, and read only memory (ROM) 23 connected to bus 24. The CPU 21 may be any of several commercially available microprocessors such as the Motorola 68030 and 68040 microprocessors commonly used in the Apple Macintosh® computers or the Intel 80386 and 80486 microprocessors commonly used in the IBM PS/2 computers. Other microprocessors, such as RISC (for reduced instruction set computer) microprocessors typically used in workstations, can also be used. The ROM 24 stores the basic microcode, including the basic input/output system (BIOS), for the CPU 21. The operating system (OS) for the computer system 10 may also be stored in ROM 24 or, alternatively, the OS is stored in RAM 22 as part of the initial program load (IPL). RAM 22 is also used to store portions of application programs and temporary data generated in the execution of the programs. The bus 24 may be the Apple NuBus®, the IBM Microchannel® or one of the industry standards such as the ISA (industry standard adapter) or EISA (extended industry standard adapter) buses.

Also connected to the bus 24 are various input/output (I/O) adapters, including a user interface adapter 25 and an I/O adapter 26. The keyboard 16 is connected to the user interface adapter 25, and the I/O adapter 26 connects to a floppy disk drive 27 and a hard disk drive 28. The floppy disk drive 27 allows the reading and writing of data and programs to removable media, while the hard disk drive 28 typically stores data and programs which are paged in and out of RAM 22. The display device 14 is connected to the bus 24 via a display adapter 29. A communication adapter 30 provides an interface to a network. Other supporting circuits (not shown), in the form of integrated circuit (IC) chips, are connected to the bus 24 and/or the CPU 21. These would include, for example, a bus master chip which controls traffic on the bus 24. The bus 24 may, in some computers, be two buses; a data bus and a display bus allowing for higher speed display operation desirable in a graphic user interface.

A shading architecture model (discussed in further detail below with reference to Figure 7) is based on object-oriented programming principles. Object oriented programming (OOP) is the preferred environment for building user-friendly, intelligent computer software. Key elements of OOP are data encapsulation, inheritance and polymorphism. These elements may be used to generate a graphical user interface (GUI), typically characterized by a windowing environment having icons, mouse cursors and menus. While these three key elements are common to OOP languages, most OOP languages implement the three key elements differently.

Examples of OOP languages are Smalltalk, Object Pascal and C++. Smalltalk is actually more than a language; it might more accurately be characterized as a programming environment. Smalltalk was developed in the Learning Research Group at Xerox's Palo Alto Research Center (PARC) in the early 1970s. In Smalltalk, a message is sent to an object to evaluate the object itself. Messages perform a task similar to that of function calls in conventional programming languages. The programmer does not need to be concerned with the type of data; rather, the programmer need only be concerned with creating the right order of a message and using the right message. Object Pascal is the language used for Apple's Macintosh® computers. Apple developed Object Pascal with the collaboration of Niklaus Wirth, the designer of Pascal. C++ was developed by Bjarne Stroustrup at the AT&T Bell Laboratories in 1983 as an extension of C. The key concept of C++ is class, which is a user-defined type. Classes provide object oriented programming features. C++ modules are compatible with C modules and can be linked freely so that existing C libraries may be used with C++ programs. The most widely used object based and object oriented programming languages trace their heritage to Simula developed in the 1960s by O-J. Dahl, B. Myhrhaug and K. Nygard of Norway. Further information on the subject of OOP may be had by reference to *Object Oriented Design with Applications* by Grady Booch, The Benjimin/Cummings Publishing Co., Inc., Redwood City, Calif. (1991).

The general concepts of object oriented programming are briefly described above and are believed to be known and will not be described in detail here. Very generally, data is abstracted and encapsulated, with objects representing or containing shading information being represented by varying data format without changing the overall architecture. The interfaces to the object remain constant, with the objects themselves being abstract and independent.

The class or object in object-oriented programming design encapsulates structure (e.g., data) and behavior (e.g., so-called "method functions") which operate on the structure. In object-oriented design, an interface is an outside view of a class or object while hiding the structure and behavior of the class or object. Additionally, all objects descending from a base class inherit the properties of the base class and thus will have the same properties thereof and are polymorphic with respect to base class operations. Hence, objects descending from the base class can be used to represent an instance of the base class and can be substituted whenever a base class is called.

Hence, an unlimited number of shading possibilities can be used by the shading architecture model and the shading architecture model allows shading to be represented without a programmer or user needing to know how the data content is represented. Shaders, which compute a displayed color based on various parameters, e.g., illumination, texture, spatial orientation and color information, may be freely selected with minimal (if any) modification of the renderer, depending upon various parameters (e.g., time, image quality, etc.) Thus, shading possibilities can be easily extended as new models and schemes are developed, as compared to the prior art systems in which fixed (or at the most very limited sets of shading effects) shading computational schemes are employed.

Figure 7 illustrates the basic organization of the invention and can be likened to a Booch diagram. Classes and subclasses of objects (in the object-oriented programming sense of the term) illustrate a hierarchy thereof in accordance with arrows; each line pointing to a next higher level of the hierarchy and thus represents an "is a" relationship. A "has" or containment relationship is shown between selected classes and subclasses. A "uses" relationship indicates the manner in which the use occurs. For a detailed explanation of Booch diagrams, reference is made to "Object Onented Design - With Applications" by Grady Booch as mentioned above.

Preferably, the invention is embodied in object technology which has been developed from so called object oriented programming. Object oriented programming has been of increasing interest as data processing technology has provided increased support for parallel or concurrent processing of many different tasks. In object technology, objects which are preferably emulated with a programmed general purpose computer but which could be considered or actually embodied as special purpose data processors, are provided to perform the various functions which are required. Data required for the relatively small number of methods or procedures which can be performed by each object are closely associate with the object, itself. The methods are encapsulated or hidden from other objects which can call for a particular method to be performed by the object.

Further, objects may be grouped by similar characteristics into classes or subclasses and characteristics of a class either data or methods) may be inherited by a subclass and need not be otherwise specified. Additionally, inherited characteristics may be overridden by objects in a subclass; resulting in a property known as polymorphism (sometimes referred to as run time binding since the override is invoke with a method being performed).

Therefore, within the context of the preferred implementation of the invention, objects and classes thereof are essentially functional elements of an overall system. The functional relationships between these elements are defined in terms of definitidn of responsibilities (e.g methods or operations which include but are not limited to the creation other objects) and the hierarchical dependencies relating objects and classes of objects. The act of defining the hierarchy and inheritance of objects is generally referred to as "subclassing". Accordingly, the invention will be described in terms of the responsibilities and dependencies of an organization of classes and subclasses as readily understood by those skilled in the art. Virtually any data processing system will contain at least one display device or a display device driver. When the system is booted, internal codes will access various devices contained in (e.g. connected to) the system, including the display device(s) or driver(s), and provide for communication between each device and the central processor over an internal system bus. In broad terms, the video framework in accordance with the invention is activated at this time and is responsive to continual or periodic traversing or "walking" of the bus by one or more configuration access managers to instantiate or delete display devices and drivers as well as to alter control of display presentation, as necessary, to reflect the present state of the system.

To appreciate the nature of the invention, the concept of "framework" and the relationship of a framework to "objects" and "object oriented programming" should be understood. "MACAPP: An Application Framework" by Kurt A. Schmucker, published in Byte magazine August 1986 is an early article describing a framework and the basic concepts embodied therein. An important property of objects is their ability to encapsulate data and methods for which the object is responsible. That is, a generic command may be issued to an object without need for any other object to know the internal details of how the object will carry out the command.

By the same token, there is no need for global compatibility of commands, data, file names and the like and thus objects may be freely associated with one another. A framework is, in essence, a generic application comprising an association of classes of objects with which other objects may be associated, as necessary, to form a more specific application. The framework, as an association of classes of objects with functional interrelationships between classes of objects defined therein may provide any desired degree of general or specific functionality and will provide for correct functionality of additional objects which may be associated with the framework.

A framework may thus be regarded as a system which provides an implied network of responsibilities between objects, provides for inheritance between classes of objects (e.g. data and methods of superclasses at higher hierarchical levels of classes of objects), and provides for calling of libraries in response to events. A system formed as a framework may also be customized by the addition of objects which perform more specific functions and which may also override functions provided by the framework. Machine-specific and device-specific objects in various classes and subclasses of the framework allow the framework, itself, to be machine- and device-independent and of generalized applicability. Further, a particular framework is characterized by the interrelationships it establishes between objects and classes of objects in terms of division of responsibilities and inheritance and the functionality it thus achieves. A framework, itself, is also useful as a template for the development of specific applications in which customization and functional overrides may be provided as specific objects therein.

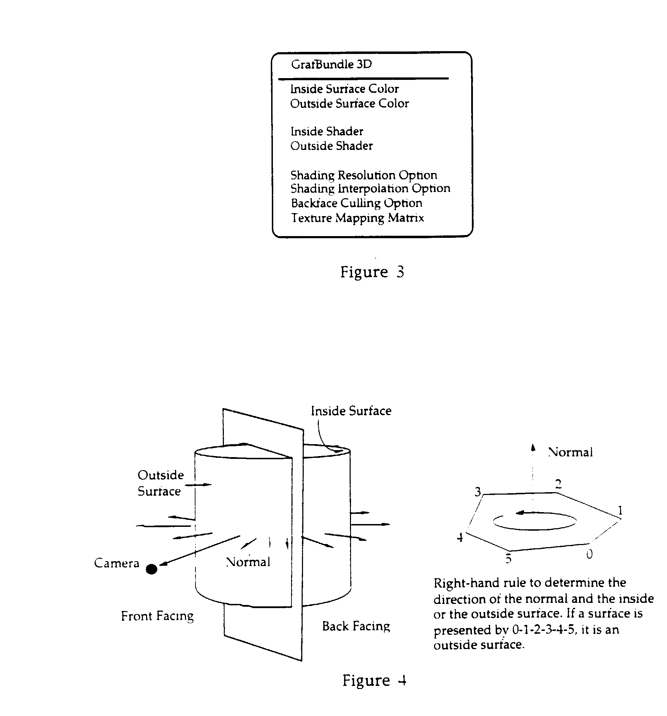

Referring to Figure 3, the 3D portion of an attribute object (e.g., a so-called "TGrafBundle3D" object, not discussed in detail in this application) of the preferred operating system, is illustrated which determines the colors of a 3D surface during rendering and provides a renderer with a set of shading-related objects and options that guide shading calculation, with respect to some environmental variables (e.g., a light source, a camera). The 3D renderer provides shading information to the shader which computes a color or shading and returns the computed color to the renderer for output to a display device. To provide an overall understanding of the invention, a very brief description will be provided on some shading objects. Detailed discussion of each element will follow.

The operating system allows a surface to be shaded differently according to the surface orientation. A surface is an "outside surface" if it is defined according to the right hand rule (Figure 4). In this case, a 3D pipeline uses 'outside' surface color and 'outside' shader for shading computation to determine the color of this surface.

A shading resolution option refers to the frequency of calling the inside or outside shader from a renderer during rendering and it controls image quality. A shading interpolation option controls how to "fill in" the colors for pixels between shading samples. A backface culling option determines whether a backfacing surface can be skipped during rendering. A texture mapping matrix in TGrafBundle3D establishes the mapping relation between a 3D geometry and a 2D texture. For a surface oriented data base (e.g., TSurface3D), the matrix represents the mapping relation between the (u,v) parameters and a map. Each individual object and option of TGrafBundle3D is discussed hereinbelow in detail.

### Inside and Outside Colors

```
TGrafBundle3D::AdoptInsideColor(TColor* Color);
TGrafBundle3D::AdoptOutsideColor(TColor* Color);
```

The two pseudo code routines above assign the base colors to inside and outside surfaces. The surface color will be modified by shaders to derive the color for display.

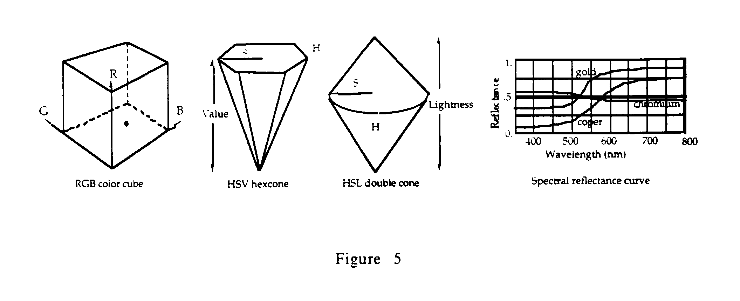

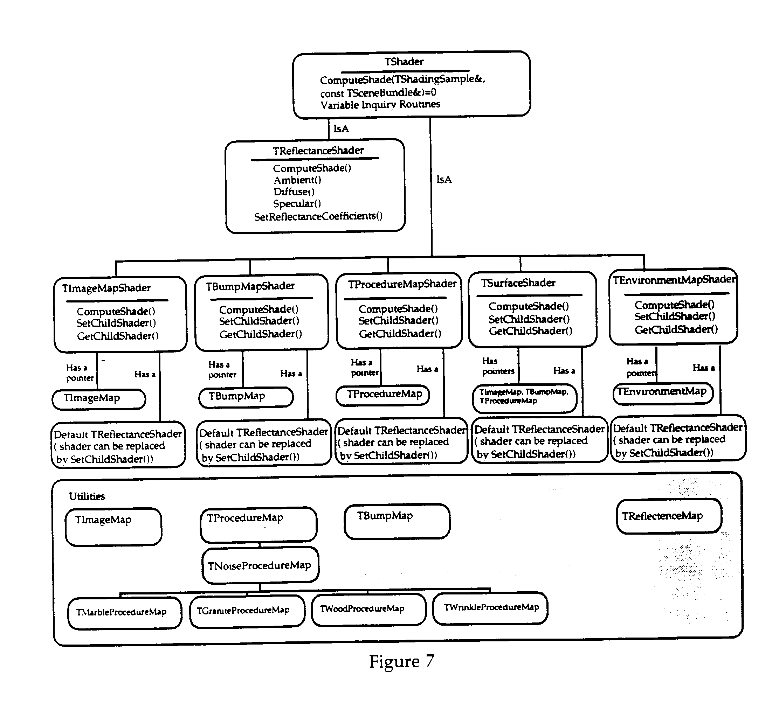

The inside or outside color applies to the entire inside or outside surface. A renderer in a 3D pipeline chooses one of the two colors (e.g., determined by the surface orientation, with respect to the camera's position) and always leaves the color in fBaseColor in TShadingSample, as defined below. Any future modification on colors is entirely determined by shaders. This function takes a TColor object. Users may choose any convenient color space for the color assignment, as shown in Figure 5. TColor allows user to define colors as spectral samples with which advanced shading models can be derived.

If the bundle (e.g., shading) is initialized to a color of one type (e.g., RGB) and the shader uses a different color model (e.g. spectral distribution), then color conversion may be necessary at least once during the shading calculation. This conversion is done automatically by TColor subclasses, but can be quite expensive if a per-pixel shading is required. Thus, the same color model for the object color, shader color, and light source color should be chosen. The pseudo code for initializing the colors is set forth below.

### Default Setting

The inside color is initialized to TRGBColor(1.,0.,0.).        //Red

The outside color is initialized to TRGBColor(1.,1.,1.).        // White

### Example

```
aGrafBundle.AdoptInsideColor(new TRGBColor(.3,.3,.9));        // bright blue
aGrafBundle.AdoptOutsideColor(new THSVColor(0, 0, 1,));        // white
```

### Inside and Outside Shaders

Looking at inside and outside shaders in more detail, the pseudo code for setting the inside and outside shaders is set forth below.

```
TGrafBundle3D::AdoptInsideShader(TShader* aShader);
TGrafBundle3D::AdoptOutsideShader(TShader* aShader);
```

The above two routines assign shaders to inside and outside surfaces. Based on the surface orientation, a renderer chooses either an inside shader or an outside shader for shading calculation.

### Default Setting

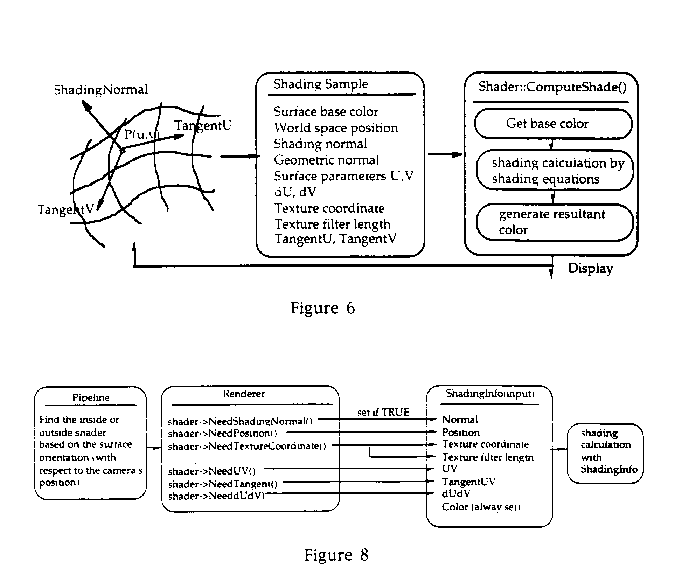

The default inside shader is an instance of TReflectanceShader.
The default outside shader is an instance of TReflectanceShader.
(TReflectanceShader is explained in greater detail below.)
A shader object, which simulates 3D attributes of a surface, computes colors or shading related variables for a renderer in a 3D pipeline. A renderer (e.g., a Z-buffer), as shown in Figure 6, first determines if a point on a surface is visible relative to all other objects in a scene. If a point is visible, a renderer then initializes a TShadingSample object and passes it to a shader object for shading evaluation, along with some light source objects and the camera object which reside in another object (e.g., TSceneBundle) which is not described in detail in this application. TShadingSample describes local surface characteristics such as position and orientation of the surface at the location being shaded. The information is provided by a renderer. The member function Computeshade() performs all shading computation and stores the resultant color in TShadingSample for display on the CRT or the like. This process repeats until all primitives are rendered.

Multiple shader objects can easily be arranged in a pipelined fashion. At each 'stage' of the pipeline, the function ComputeShade() of a shader modifies TShadingSample and sends TShadingSample down to the next stage in the pipeline. Obviously, a shader may contain pipelined shaders. A renderer executes the function myCompoundShader::ComputeShade() to return the final color.

A key element of the 3D bundle design is the separation of a shader from a renderer. A shader does not need to know how the renderer generates the information. The relationship between a renderer and a shader, the contents of TShadingSample, and a detailed example of using TShadingSample is discussed below. A renderer and a shader are intertwined. A shader relies on a renderer to provide the necessary information (e.g. shading normal) for shading calculation. A renderer relies on a shader to generate the color for final display.

Instead of requesting a renderer to recompute the necessary information, a shader 'informs' a renderer about what it needs for shading evaluation. By taking advantage of information coherence among neighboring pixels, a renderer may use a standard scan conversion method to generate the information through linear interpolations among shading samples. In actual implementation, a shader object maintains information about what variables are referenced within the shader and therefore unnecessary calculation by a renderer can be avoided.

A shader object calculates color-related information based on the TShadingSample object which includes:

**Shading Normal** -- a vector which is used for shading computation.
**Geometric Normal** -- a vector which is perpendicular to a surface (e.g., the cross product of the tangent vectors in the U and V directions).
**World Position** - a 3D point defined in world coordinate system.
**Texture Coordinate** - the surface texture coordinates.
**Filter Basis Vectors** - the filter used for generating anti-aliased texture (e.g., two vectors are needed to form a filter boundary)
**U, V** -- the surface parameters (0 to 1).
**TangentU, TangentV** - the derivative of a particular surface location with respect to U and V (they are sometimes represented by dPdU and dPdV).
**dU, dV** - the change in parameters U and V across a surface area.
**Base Color** - the surface color to be modified by light sources.

**Resultant Color** - the computed color.

An example of pseudo code for TShadingSample is listed below:

```
class TShadingSample
{
        public:
                TGPoint3D           fWorldPosition;

                TGPoint3D           fShadingNormal;

                TGPoint3D           fGeometricNormal;

                TGPoint             fUV;

                TGPoint3D           fTangentU;

                TGPoint3D           fTangentV;

                TGPoint             fTextureCoordinate;

                TGPoint             fTextureFilterLength;

                TGPoint3D           fdU;

                TGPoint3D           fdV;

                TRGBColor           fBaseColor;

                TRGBColor           fResultantColor;



        };
```

Generally, the shader which modifies TShadingSample is responsible for saving and restoring the original input values. There is a clear distinction between pipelined shaders and sibling shaders. By saving and restoring variables, sibling shaders can always receive the unmodified TShadingSample.

Further, virtual function in a shader GetShadingUsageVariables() is used for variable inquiry. For example, if a renderer wants to know what variables a shader pipeline needs, it only has to call a shader's GetShadingUsageVariables(). This routine searches through all shading variables of shaders in a shader pipeline and returns a correct value. A renderer only has to call this routine once for a surface.

Another guideline for using TShadingSample includes that only the terminal node returns the computed color to fResultantColor. The first shader is allowed to perform post-processing which modifies fResultantColor. This ensures that there will be no confusion when an intermediate shader chooses a color between fBaseColor and fResultantColor in the middle of the pipeline.

Additionally, to design exception-safe shaders in a shader pipeline, a local object, residing in the implementation of ComputeShade(), can be constructed whose job is to swap those variables to be modified. The exception handler guarantees calling the destructor if a software exception occurs. Hence, the data in TShadingSample will still be valid. The pseudo code for a local object, for example, called TSwapVariables may appear as:

```
class TSwapVariables
{
        TSwapVariables(TShadingSample& shadingSample)
        {   // save variables }
        ~TSwapVariables()
        {   // restore variables }
    };
```

The shader design should preferably satisfy a wide range of shading requirements-from a very simple flat surface shading (e.g., for quick previewing) to a high quality image rendering (e.g., for printing). The shader design and implementation covers Gouraud and Phong shading, texture image mapping with various filtering techniques, bump mapping, and reflection mapping.

The inventive shader design and implementation do not cover ray-tracing and radiosity methods for global illumination. Due to the nature of inter-dependency among objects, global illumination relies on special-purpose renderers to perform shading-related operations such as the ray-intersection calculation for ray tracing, and the form-factor calculation for radiosity. The techniques above are directed to local illumination in which the shading can be determined without taking the surrounding objects into account. Since many techniques in global illumination involve recursive integration of local illumination, local illumination will be focussed upon. Global illumination is believed to be easily integrated into the system described below.

**Shader Implementation**

Figure 7 shows the shader object and its default shader hierarchy. The abstract base class TShader has the following major member methods:

```
virtual void ComputeShade(
            TShadingSample& shadingSample,
            const TSceneState& sceneState)=0;
// SceneState has global variables such as a camera, and light sources.

virtual void GetShadingUsageVariables(
            TShadingUsageVariables& variables) const;
```

Looking at the TShader base class and the shader hierarchy in greater detail, the renderer asks the shader what type of variables are required by the shader. The TShadingSample is generated by the renderer (e.g., a Z-buffer) to allow TShader to compute the shading and determine the final color.

TReflectanceShader, a subclass of TShader, computes the color of the surface based on a simple light illumination shading model.

TReflectanceShader is a default shader of the TImageMapShader, TBumpMapShader, TProcedureMapShader, TSurfaceShader, and TEnvironmentMapShader, all discussed individually below, and as shown in Figure 7 TReflectanceShader can be easily set within the utilities by SetChildShader(). TImageMapShader, TBumpMapShader, TProcedureMapShader, TSurfaceShader, and TEnvironmentMapShader query their utilities about the surface color/shading and then perform their respective computations.

Figure 8 illustrates the shading variables initialized by a renderer. A 3D pipeline detects all variables needed in a shader by calling the shader's GetShadingUsageVariables() routine several times, as shown, for example, in Figure 8. A renderer in a pipeline responds to the need by storing some valid information (shading normal and texture coordinates in this example) in TShadingSample. Eventually, a renderer will invoke a shader's ComputeShade() to determine the color for display. A renderer only has to make variable inquiry once for a surface, not for every pixel during rendering. This is significant in terms of time and efficiency. Further, the renderer need only provide minimal information. A 3D pipeline may group a few items in TShadingSample, and generate the necessary information in each group during rendering.

Regarding derived shaders, a shader may be derived directly from the base TShader if the shader can generate colors based on the contents of TShadingSample alone. Since directly derived shaders are simple, they are best suitable for image previewing where the rendering speed is crucial. These simple shaders produce just enough shading information to reveal the three-dimensionality of objects.

To incorporate a light illumination model into a shader, another derived class, TReflectanceShader, is examined. The TReflectanceShader class simulates the way objects reflect light. It models the interactions of illumination with surface reflection properties to calculate the appropriate color of surfaces. From a simple flat shading to some advanced shading models such as ray-tracing, etc., a reflection model can always be divided into three major components: ambient reflection, diffuse reflection, and specular reflection. The implementations for different illumination models vary significantly.

TReflectanceShader implements three key functions: Ambient(), Diffuse(), and Specular(), based on the basic reflection model presented above.

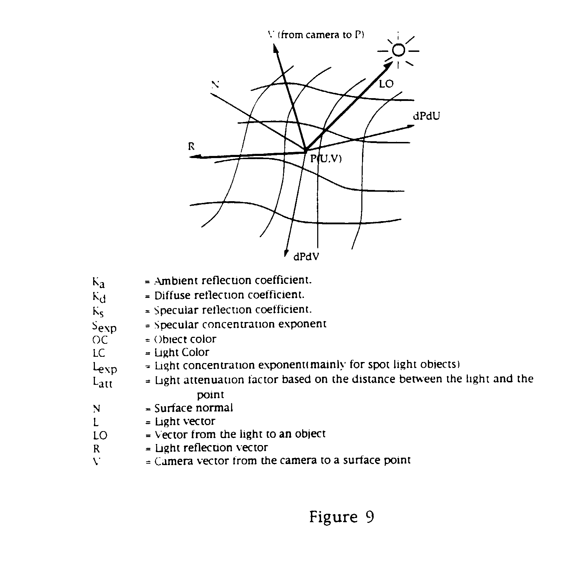

The default implementation of TReflectanceShader assumes that the color of a surface is the weighted sum of the intensity computed from Ambient(), Diffuse(), and Specular(). To understand the relationship between a shader, TShadingSample, a camera, and light sources in a pipeline, these three functions are examined below, starting by defining some symbols, as shown in Figure 9 which will appear in many shading equations that follow.

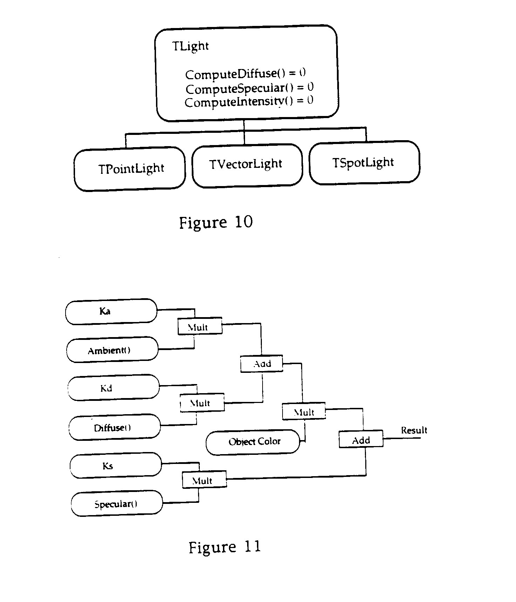

Additionally, the light classes provided in the operating system are shown in Figure 10. The relevant symbols are defined as follows:

| | |
|---|---|
| $K_a =$ | Ambient reflection coefficient. |
| $K_d =$ | Diffuse reflection coefficient. |
| $K_s =$ | Specular reflection coefficient. |
| $S_{exp} =$ | Specular concentration exponent |
| $OC =$ | Object color |
| $LC =$ | Light Color |
| $L_{exp} =$ | Light concentration exponent (mainly for spotlight light objects) |
| $L_{att} =$ | Light attenuation factor based on the distance between the light and the point |
| $N =$ | Surface normal |
| $L =$ | Light vector |
| $LO =$ | Vector from the light to an object |
| $R =$ | Light reflection vector |
| $V =$ | Camera vector from the camera to a surface point |

All derived light objects must implement the contribution of ambient, diffuse, and specular intensity. The member function ComputeIntensity() returns the color of a light at the location of interest (typically, the surface point to be shaded). The function ComputeIntensity() of TLight also allows users to create special light sources. For example, considering a 'window light', during rendering, the position of a point to be rendered lets a window light determine what the light intensity (either black or a color interpolated from the window boundary) is at that point.

Regarding coefficient setting, objects react to ambient, diffuse, and specular reflection differently. For example, a dull surface shows strong diffuse reflection, but very little specularity. In contrast, a shiny surface displays strong specular reflection. The TReflectanceShader class allows users to assign values to a set of coefficients ($K_a$ as the ambient-reflection coefficient, $K_d$ as the diffuse-reflection coefficient, and $K_s$ as the specular-reflection coefficient) that simulate material properties. These coefficients characterize the material of the surface.

The preferred operating system preferably uses Phong's illumination model for calculating specular reflectance and assumes that a maximum highlight occurs when the angle between V and R vectors is zero and falls off sharply as the angle increases. This falloff is approximated by $\cos^n(\text{angle})$, where n is the material's specular-reflection exponent. A small value provides a broad falloff, whereas a higher value simulates a sharp specular highlight. The default implementation will scale an overflowed intensity back to a legal range.

TReflectanceShader has the following major member methods:

```
virtual void              ComputeShade(
        TShadingSample&      shadingSample,
        const TSceneState&      sceneState);


//returns the total diffuse contribution from all      //light sources.


virtual void Diffuse(
        const TShadingSample&        shadingSample,
        const TSceneState&           sceneState,
        TColor&                      returnColor);


//returns the total specular contribution from all    //light sources.


virtual void Specular(
        const TShadingSample&        shadingSample,
        const TSceneState&           sceneState,
        double                       specularExponent,
        TColor&                      returnColor);


virtual void     .   SetAmbientCoefficient(
        double           ambientCoefficient);
virtual void         SetDiffuseCoefficient(
        double           diffuseCoefficient);
virtual void         SetSpecularCoefficient(
        double           specularCoefficient);
virtual void         SetSpecularExponent(
        double           specularExponent);
```

**Default Setting**

```
Ambient Coefficient =      .3;
Diffuse Coefficient =      .7;
Specular Coefficient =     0.; // no specular highlight
Specular exponent =        20.;
```

**Example**

```
        aReflectanceShader.SetAmbientCoefficient(.15);
```
Turning to the member function ComputeShade () of the TReflectanceShader, this member function uses the following equation for shading evaluation (a shader tree version is shown in Figure 11):


ObjectColor*(Ka*Ambient()+Kd*Diffuse())+Ks*Specular()


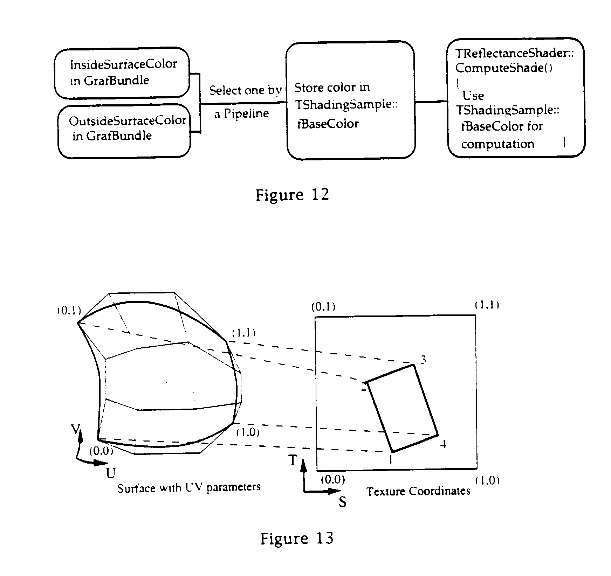

The variable ObjectColor in the equation above always uses fBaseColor of TShadingSample, which is either an inside color or an outside color as set by a renderer, as shown in Figure 12. To achieve better image quality, with some carefully-tuned reflection coefficients and the surface color, the simple equation used in TReflectanceShader generates images with a reasonable quality. However, due to the lack of surface detail, objects with TReflectanceShader sometimes appear to be either too smooth or too uniform. One way to increase the surface detail is to model the detail by 3D geometric primitives. For example, surface patches may be used to describe the wood patterns of a floor.

However, as detail becomes finer, modeling with geometric primitives to simulate the surface detail becomes impossible. The preferred operating system provides alternatives to increase surface detail by mapping images, either from real digitized images or procedurally-defined "virtual" images, to 3D primitives.

Utility classes that use available image and procedure textures libraries are also advantageously used by the shader framework. For example, a map can represent base colors of a surface, it can be used for normal vector perturbation (a "bump map"), or it may represent a simple reflection that simulates the surrounding environment of 3D objects. The inventive operating system provides a set of mapping utilities that can be used in mapping-related shaders.

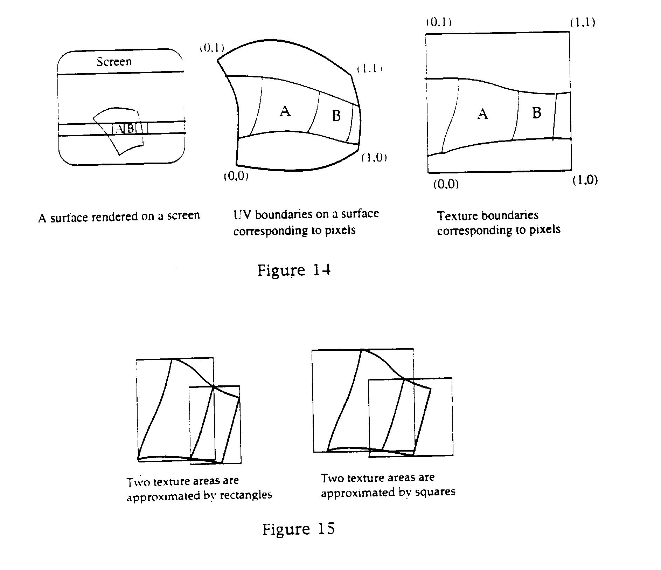

The preferred operating system's texture mapping utilities provide functions to generate mapping parameters (u, v) for 3D geometries. The preferred operating systems texture mapping facilities provide two approaches to solving aliasing in texture mapping. One approach is to use space variant filtering, by which the dimension of the filter is recomputed for every pixel. Since each pixel on the screen has a different corresponding texture boundary, a space-variant filter is essential for solving aliasing. By default, a quadrilateral texture area is approximated with either a square or a rectangle, as shown in Figure 14 and '5. Users may ask a renderer to supply the two base vectors of an ellipse filter for super-quality texture mapping.

A second approach is to pre-filter using a mip-map technique that requires three indices (texture, position, and the filter diameter) to determine the value in a map. The preferred operating system's default renderer produces the information for a space-variant filter to be used for mip-map access. Upon receiving the information, a mip-map extracts values from an appropriate sub-map.

The preferred operating system provides a several map utility classes, e.g., TImageMap, TBumpMap, TProcedureMap, and TEnvironmentMap, or the like, which can be used by various shaders. Each map class contains a mip-map, constructed internally, for anti-aliasing.

TImageMap, which is another map utility, is the texture map used for color modification. TImageMap can be used in shaders that interpret the contents in a map as surface color modification. The value extracted from a map can be used as a direct color substitution, as an index to another color map, or as a multiplier. The scheme of interpretation is entirely determined by the shaders. A TImageMap texture is only applied to the skin (e.g., surface) of geometric primitives during rendering (e.g., similarly to wallpaper being applied to the surfaces of walls). The TImageMap class has the following major methods:

```
virtual void      GetValue(
          const TShadingSample&        info,
          TColor&                      returnColor)
     const=0;
```

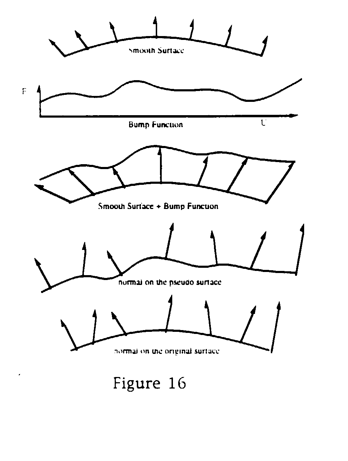

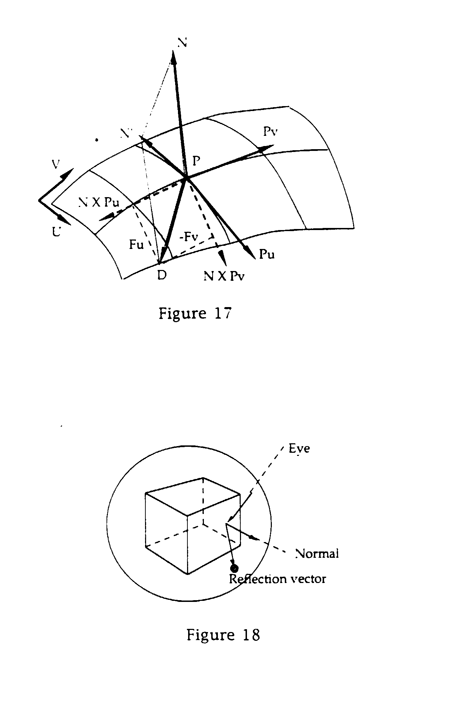

Hereinbelow is described TBumpMap, which is a texture mapping function used for normal perturbation. Bump mapping, as shown in Figures 16 and 17, is a useful technique because it simulates a bumpy or dimpled surface rather than altering the surface geometry (which is sometimes impossible) or modulating the color of a flat surface. An example of the pseudo code for the TBumpMap class is listed below:

```
virtual TGPoint3D GetValue(



     const TShadingSample&        ShadingSample)        const=0;
```

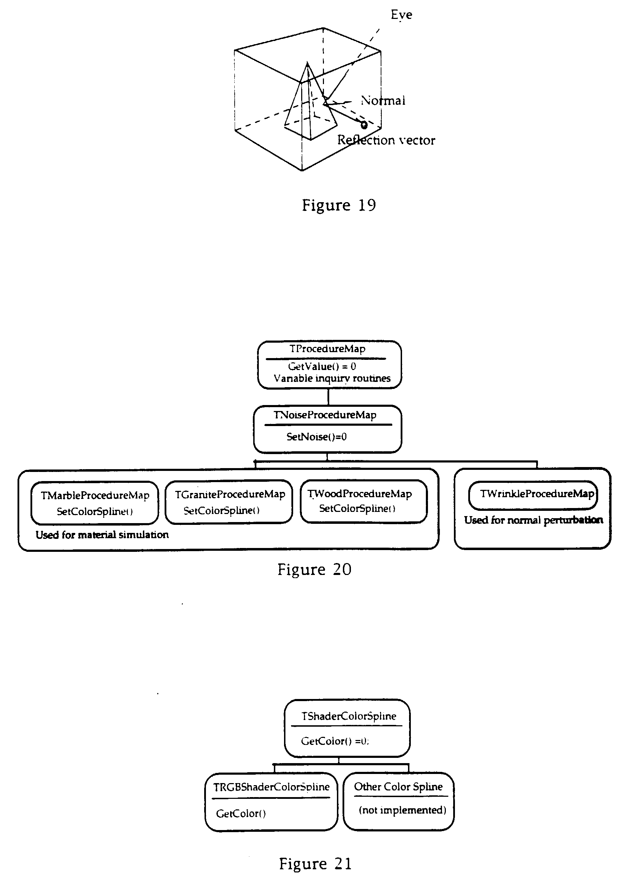

Another map utility included in the inventive operating system is T EnvironmentMap, which is a texture map used for reflection as illustrated in Figures 18 and 19. The pseudo code for TEnvironmentMap is listed below:

```
virtual void GetValue(
          const TShadingSample&        info,
          const TGPoint3D& eyeVector, TColor& retVal)
     const=0;
```

The colors of a surface can also be defined procedurally, by which colors are generated on the fly based on the position, normal, and some other geometric information of an object. For example, a surface with a checkerboard pattern may be displayed by evaluating the texture coordinates during rendering. In this case, a huge 2D checkerboard image need not be generated to be used as a texture.

A first concept is that of procedure texture. The major difference between an image texture and a procedure texture is that the latter is defined over a three dimensional region and therefore it permits texture to be applied without regard to the shape of an object. Additionally, procedure textures generally have very low memory requirements. This unique feature allows a complex image to have many 3D objects made of different materials. Further, they can be generated at controllable levels of detail, they can be band-limited to avoid aliasing problems, and they usually require few parameters to define the mapping.

The center element of a procedure shader is the noise generation and how to use the noise. The preferred operating system provides a base class TGrafNoise and a default derived class TLatticeNoise, with all default procedure textures preferably using TLatticeNoise (which can be replaced by a user's noise object, if desired). The pseudo code for the base TNoise object is listed below:

```
class TGrafNoise
{
        public:

        virtual double
```

```
        Noise(       double point) const = 0;

virtual double
        Noise(       const TGPoint& point) const = 0;

virtual       double
        Noise(       const TGPoint3D& point) const = 0;

virtual       TGPoint3D
        DNoise(      const TGPoint3D& point) const = 0;

virtual       double
        Turbulence(       double point,
                                                double
pixelSize  = 0.1) const = 0;

virtual       double
        Turbulence(       const TGPoint& point,
                                                double
pixelSize  = 0.1) const = 0;

virtual       double
        Turbulence(             const TGPoint3D& point,
                                                double
pixelSize  = 0.1) const = 0;

virtual       TGPoint3D
        DTurbulence(      const TGPoint3D& point,
                                                double
pixelSize  = 0.1) const = 0;
}
```

The preferred operating system preferably provides a few built-in procedure maps which simulate materials such as marble, granite, and wood. Shaders that contain these maps produce images as if 3D objects were made of a solid material. Procedure texture maps can also simulate the normal perturbation, without a texture image as needed in the TBumpMap base class.

The base class TProcedureMap provides all variable inquiry routines such as GetRequiredShadingVariables() so that a shader that contains this procedure map can inform a renderer to provide the necessary information. The preferred operating system's sample procedure maps are illustrated in Figure 20.

As an example, a complete sample map, TMarbleProcedureMap, will be examined to illustrate the relation between TNoise and procedure maps. Figure 21 shows a class diagram that assigns colors to procedural shaders. By following this sample class, users may write other shaders of various material attributes without difficulty. An example of the pseudo code is presented below.

```
class TProcedureMap
{
        public:

        virtual void        GetValue(
                TShadingSample&                shadingSample,
                const TSceneState&             sceneState)                const=0;

        // Indicate which field is required in    //TShadingSample.
        // Shader needs this information to tell a     //renderer what variables
to feed.
        virtual void GetRequiredShadingVariables(
                TShadingUsageVariables& variables) const=0;

        // Indicate which field is modified in    //TShadingSample.
        // Shader needs this information to save and store        //variables in
TShadingSample
        virtual void GetModifiedShadingVariables(
                TShadingUsageVariables& variables) const=0;
}

class TNoiseProcedureMap : public TProcedureMap
{
        public:

                // Allow to set a user-defined noise object    virtual  void
        SetGrafNoise(
                        const TGrafNoise&        noise)=0;

        virtual void        GetValue(
                TShadingSample&                shadingSample,
                const TSceneState&             sceneState)
        const=0;

                // Indicate which field is required in
        //TShadingSample.
                // default to 'WorldPosition' only,                //subclasses
override them
                virtual void GetRequiredShadingVariables(
                TShadingUsageVariables& variables) const;

                // Indicate which field is modified in
        //TShadingSample.
```

```
            // Shader needs this information to save and                    //store
variables in TShadingSample
        virtual void GetModifiedShadingVariables(
            TShadingUsageVariables& variables) const=0;
}


class TMarbleProcedureMap : public TNoiseProcedureMap
{
        public:
        virtual void SetGrafNoise(
            const TGrafNoise& noise);

        // determine the color
        virtual void SetColorSpline(
            const TShaderColorSpline& spline);
        virtual void GetValue(
            TShadingSample& info, const
        TSceneState&)const;
        // Indicate which field is modified in   //TShadingSample.
        // Shader needs this information to save and store      //variables in
TShadingSample
        virtual void GetModifiedShadingVariables(
            TShadingUsageVariables& variables) const;

}
```

A procedure map can also alter the incoming normal as provided by the default TWrinkleProcedureMap.

Previously, some utility classes were discussed that either produce the surface color or affect the shading normal. TImageMapShader has a pointer to TImageMap (initialized to NIL, set by users).

TImageMapShader also has a default TReflectanceShader. Once the color is extracted from TImageMap, the color will be modified by light sources through the default TReflectanceShader. The default TReflectanceShader can be easily replaced by any shader through SetChildShader(). An example of the pseudo code is illustrated below.

```
class TImageMapShader : public TShader{
        TImageMapShader();
        TImageMapShader(const TImageMap& map);
        TImageMapShader(
            const TImageMap& map,
            const TShader& childShader);
```

```
TImageMapShader(const TImageMapShader& source);

virtual ~TImageMapShader();

virtual void SetImageMap(
        const TImageMap& imageMap);

virtual const TImageMap*      GetImageMap()const;

virtual void ComputeShade(
        TShadingSample& shadingSample,
        const TSceneState& sceneState);

virtual void SetChildShader(
        const TShader& aShader);

virtual TShader*   GetChildShader() const;

virtual void  GetShadingUsageVariables(
                                        TShadingUsageVariables&
variables) const;
}
```

An example of the pseudo code for TImageMapShader is shown listed below.

```
a    GrafBundle = new TGrafBundle3D();
a    GrafBundle→AdoptOutsideShader( new TImageMapShader(TImageMap(aTImage) ));
```

TBumpMapShader has a pointer to TBumpMap (initialized to NIL, set by user) and also has a default TReflectanceShader. Once the original normal is modified by TBumpMap, the color of the object will be modified by light sources, based on the new normal. The default TReflectanceShader can easily be replaced by any shader through SetChildShader(). An example of the pseudo code is set forth below.

```
class TBumpMapShader : public TShader{
        TBumpMapShader();

        TBumpMapShader(
                const TBumpMap& map);

        TBumpMapShader(const TBumpMap& map,
```

```
                const TShader& childShader);

        TBumpMapShader(
                const TBumpMapShader& source);

        virtual      ~TBumpMapShader();

        virtual void      SetBumpMap(
                const TBumpMap& bumpMap);

        virtual const      TBumpMap* GetBumpMap()const;

        virtual void      ComputeShade(
                TShadingSample&      shadingSample,
                const TSceneState&      sceneState);

        virtual void      SetChildShader(
                const TShader& aShader);

        virtual TShader*   GetChildShader() const;

        virtual void  GetShadingUsageVariables(
                TShadingUsageVariables&      variables) const;
        }
```

TProcedureMapShader has a pointer (e.g., TProcedureMapShader is a subclass) to TProcedureMap (intialized to NIL, set by user) that may modify many fields of TShadingSample. TProcedureMapShader also has a default TReflectanceShader that computes color based on light sources and the modified TShadingSample. An example of the pseudo code is shown below.

```
class TProcedureMapShader : public TShader{

        TProcedureMapShader();
        TProcedureMapShader(const TProcedureMap& map);
        TProcedureMapShader(
                const TProcedureMap& map,
                const TShader& childShader);
        TProcedureMapShader(
                const      TProcedureMapShader& source);

        virtual      ~TProcedureMapShader();
        virtual void      SetProcedureMap(
                const      TProcedureMap& procedureMap);

        virtual const            TProcedureMap*
        GetProcedureMap()const;
```

```
virtual void          ComputeShade(
        TShadingSample& shadingSample,
        const TSceneState& sceneState);

virtual void          SetChildShader(
        const TShader& aShader);

virtual TShader*   GetChildShader() const;

virtual void  GetShadingUsageVariables(
        TShadingUsageVariables&        variables) const;

// transform fWorldPosition by this matrix
// if this routine is never called, ComputeShade()    //just uses
fWorldPosition without any      //transformation
virtual void          SetMatrix(
        const TGrafMatrix3D& matrix);
virtual const TGrafMatrix3D* GetMatrix () const;
    }
```

An example of the pseudo code for TProcedureMapShader is below.

```
aGrafBundle = new TGrafBundle3D();
aGrafBundle →AdoptOutsideShader( new TProcedureMapShader(TMarbleProcedureMap()));
```

In addition to TImageMapShader, TBumpMapShader, and TProcedureMapShader, the preferred operating system also provides a convenient shader, called TSurfaceShader, that includes many pointers (initialized to NIL, set by users) to map utilities classes provided by the preferred operating system. Most applications may only have to use this shader.

Since the order of map access affects the result of computation, TSurfaceShader accesses the map that modifies the surface color first, followed by the map that modifies the shading normal.

An example of the pseudo code for the TSurfaceShader class is listed below:

```
class TSurfaceShader : public TShader
{
        TSurfaceShader();
        TSurfaceShader(const TSurfaceShader& source);
        TSurfaceShader(const TShader& childShader);                virtual
~TSurfaceShader();

        virtual void SetImageMap(
            const TImageMap& imageMap);
```

```
// set a procedure map, also tells if the map    //modifys the normal
virtual void                SetProcedureMap(
    const TProcedureMap& procedureMap,
    Boolean forNormal = FALSE);
virtual void        SetBumpMap(
    const TBumpMap& bumpMap);
virtual const TImageMap* GetImageMap() const;
virtual const        TProcedureMap* GetProcedureMap(
Boolean forNormal = FALSE) const;
virtual const        TBumpMap* GetBumpMap() const;        virtual
void        RemoveImageMap();
virtual void                RemoveProcedureMap(
    Boolean forNormal = FALSE);
virtual void                RemoveBumpMap();
virtual void                ComputeShade(
    TShadingSample& shadingSample,
    const TSceneState& sceneState);
virtual void SetChildShader(
    const TShader& aShader);
virtual TShader*   GetChildShader() const;
virtual void  GetShadingUsageVariables(
TShadingUsageVariables&        variables) const;
```

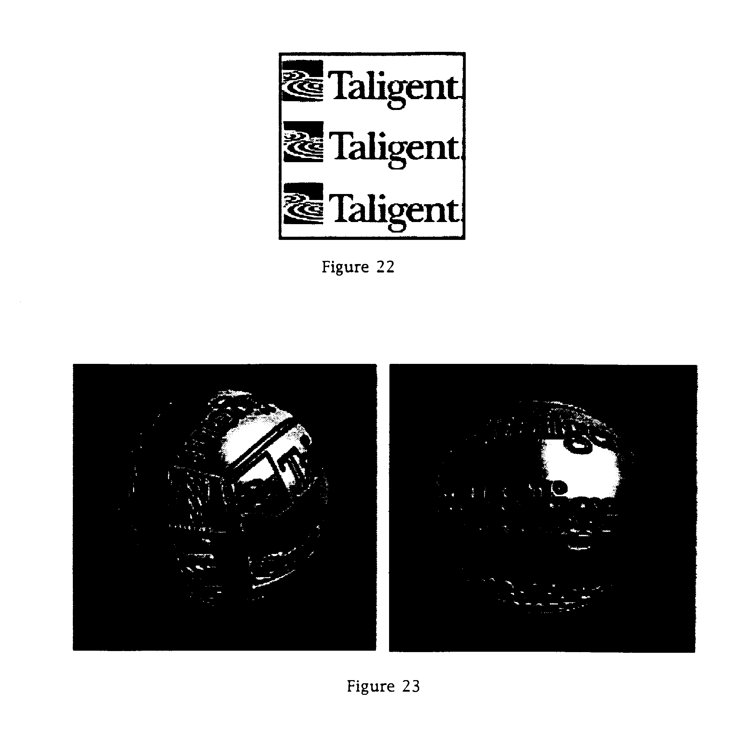

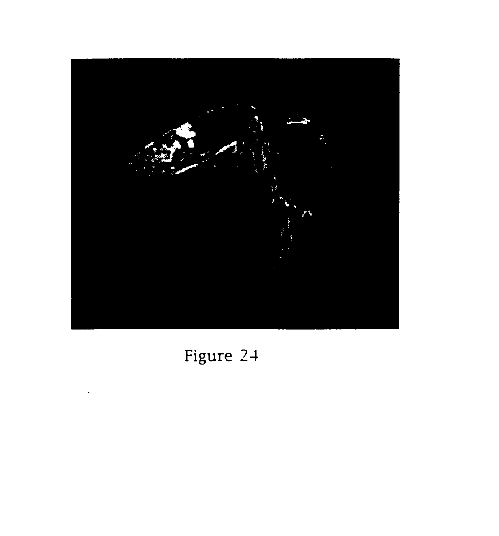

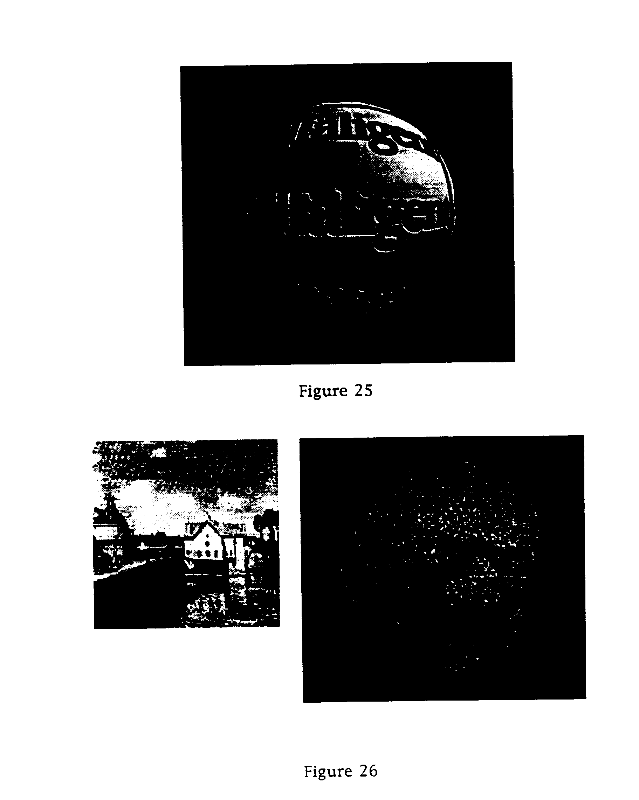

Figures 22-26 are examples illustrating various shaders in accordance with a preferred embodiment. While shader designs have been discussed above which compute shading directly from the light source, these shading models are generally referred to as local illumination models. With some carefully tuned shading parameters, light setting, and texture maps, local illumination can generate images for many applications. Since neighboring surfaces are not part of the shading computation in local illumination, the shadows cased by surfaces are ignored. However, the system discussed above is applicable to real environments in which the lighting and reflections are more complicated than local illumination. Specifically, every surface receives light directly from light sources, or indirectly from reflections from neighboring surfaces, e.g., global illumination. Global illumination models can be incorporated into the system described above and should be considered an extension of the shaders discussed above.

In sum, a method and system have been described above for use in an object oriented framework for determining the shading of a 3D surface during rendering and in which a renderer is provided with shading-related objects and options that guide shading calculation. In one aspect of the invention, a shader is provided for computing shading from light sources and surface orientation alone. The colors are the weighted sum of the ambient, diffuse, and specular reflection. The shader may include facilities for generating a texture map, a bump map, and a reflection map in the shading model to increase realism. Additionally, shading may be performed with a procedural definition so as to generate images as if objects are made of a real material such as wood or marble.

With the invention, the user freely chooses appropriate shaders according to trade-offs between speed and image quality. With the invention, the shader is established and then the renderer invokes the shader, thereby creating an efficient system which is easily extendible to a plurality of shaders and with minimal (if any) modification of the renderer. Thus, the invention is clearly advantageous over the conventional systems which provide fixed or limited sets of shading effects. Further, an interface between a rendering routine and a shader, is provided in which little if any modification of a renderer is required when a different shader is used. Thus, the shaders are extremely easy to use and implement. Further, the modification of the shaders is minimized whenever a different renderer is used. Hence, with the object oriented framework of the invention, extendibility for an unlimited number of shading models is easily provided.

**Claims**

1. A method for displaying a color image of a three-dimensional item having at least one surface upon a high resolution display (14) using a general purpose computer (12) and an object-oriented operating system with a memory having an object-oriented shading framework comprising the steps of:

(a) displaying an image of said three-dimensional item with the image being rendered from model data representing at least said one surface and light source information;

(b) creating a shader object (TShader) having a member function for calculating color from data having predefined data types, and from said light source information;

characterized by:

(c) creating a renderer object for receiving the model data;

(d) issuing a get request (GetshadingUsagevariables()) from the renderer object to the shader object to retrieve the predefined data types required by the shader object for performing the color calculation;

(e) using the retrieved predefined data types in the renderer object to create a shading sample object (TShadingSample) containing data computed from the model data having the predetermined data types;

(f) forwarding the shading sample object to the shader object to invoke the shader object member function (ComputeShade()) with the data having the predefined data types;

(g) using the renderer object to render the image with the resultant color (fResultantColor).

2. A method as recited in claim 1, wherein said image is comprised of a plurality of surfaces (A, B) some of which are not displayable, and wherein steps (d) through (g) are performed for each of the displayable surfaces.

3. A method as recited in claim 1, wherein step (g) includes the step of interpolating the resultant color (fResultantColor) over the at least one surface.

4. A method as recited in claim 1, wherein the item has and inside surface and an outside surface, characterized by creating a different types of shader objects one type (AdoptInsideShader) assigned to the inside surface and the other type (AdoptOutsideShader) assigned to the outside surface, determining in response to the model data whether an inside surface or an outside surface is to be displayed and selecting an assigned shader object so that the shading sample object (TShadingSample) is forwarded to the selected shader object.

5. A method as recited in claim 1, further comprising the steps of creating a plurality of shader objects and arranging the shader objects in a pipeline of shader objects forming a compound shader object (Pipeline), wherein each shader object of the pipeline includes a member function (ComputeShade()) responsive to model data in the shading sample object (TShadingSample) for determining shading information in accordance with a corresponding shading calculation.

6. A method as recited in claims 1 and 5, wherein step (d) comprises the step of issuing the get request to the compound shader object (Pipeline) to retrieve predefined data types required by each of the shader objects in the pipeline.

7. An apparatus for displaying a color image of a three-dimensional item having at least one surface upon a high resolution display (14) comprising a general purpose computer (12) having an object-oriented operating system, a memory with an object-oriented shading framework and means for displaying said image with the image being rendered from model data representing at least the one surface of said item and light source information; characterized by

(a) a shader object (TShader) including means reponsive to data having predefined data types and to the light source information for calculating a resultant color (fResultantColor);

(b) a renderer object including means for issuing a get request (GetShadingUsageVariables()) from the renderer object to the shader object to retrieve the predefined data types required by the shader object for performing said color calculation;

(c) means responsive to the retrieved predefined data types and to the model data for creating a shading sample object (TShadingSample) containing data computed from the model data having the predetermined data types and for forwarding the shading sample object to the shader object to provide the data having the predefined data types;

(d) means responsive to the model data and the resultant color for rendering the image.

**8.** Apparatus as recited in claim 7, wherein the image is comprised of a plurality of surfaces (A, B) some of which are not displayable, characterized by applying the issuing means, the creating means and the rendering means to each of the displayable surfaces.

**9.** Apparatus as recited in claim 7, wherein the rendering means further includes interpolating means for interpolating the resultant color (fResultantColor) over the at least one surface.

**10.** Apparatus as recited in claim 7, wherein the item has and inside surface and an outside surface, characterized by means for creating a different types of shader objects one type (AdoptInsideShader) assigned to the inside surface and the other type (AdoptOutsideShader) assigned to the outside surface, means responsive to the model data for determining whether an inside surface or an outside surface is to be displayed and for selecting an assigned shader object so that the shading sample object (TShadingSample) is forwarded to the selected shader object.

**11.** Apparatus as recited in claim 7, further comprising means for creating a plurality of shader objects and arranging them in a pipeline forming a compound shader object (Pipeline), wherein each shader object of the pipeline includes a member function (ComputeShade()) responsive to model data in the shading sample object (TShadingSample) for determining shading information in accordance with a corresponding shading calculation to generate the color information (fResultantColor).

**12.** Apparatus as recited in claims 7 and 11, wherein said means for issuing a request (GetShadingUsageVariables ()) from the renderer object to the shader object comprises means for issuing a get request to the compound shader object (Pipeline) to retrieve predefined data types required by each of the shader objects in the pipeline.

**13.** Apparatus as recited in claim 7, wherein the shading sample object creating means includes means for computing data having the predefined data types from the model data.

**14.** Apparatus as cited in claim 11, wherein the plurality of shader objects are modular and freely interchangable with one another in the pipeline arrangement.

**Patentansprüche**

**1.** Ein Verfahren zur Anzeige eines Farbbildes von einem dreidimensionalen Gegenstand, von dem wenigstens eine Oberfläche auf einer hochauflösenden (14) Anzeigevorrichtung angezeigt wird, unter Verwendung von einem Mehrzweck-Computer (12) und einem objekt-orientierten Betriebssystem, mit einem Speicher, in dem ein objekt-orientierter Schattierungsrahmen gespeichert ist, enthaltend die Schritte:

(a) Anzeigen eines Bildes von besagtem dreidimensionalen Gegenstand, wobei das Bild von Modelldaten erzeugt wird, die wenigstens eine Oberfläche und Informationen von einer Lichtquelle darstellen;

(b) Erzeugen eines Schattierungsobjekts (TShader), das eine Mitgliedsfunktion aufweist zur Berechnung einer Farbe aus Daten eines vorgegebenen Datentyps und aus Informationen einer Lichtquelle;

gekennzeichnet durch:

(c) Erzeugen eines Bilderzeugungsobjekts zum Empfang der Modelldaten;

(d) Ausgabe einer Erhalten-Anforderung (GetShadingUsageVariables()) vom Bilderzeugungsobjekt an das Schattierungsobjekt zum Auffinden der vorgegebenen Datentypen, die vom Schattierungsobjekt zur Durchführung der Farbberechnung benötigt werden;

(e) Verwenden der aufgefundenen, vorgegebenen Datentypen im Bilderzeugungsobjekt zur Erzeugung eines Schattierungs-Muster-Objekts (TShadingSample), das aus den Modelldaten der vorgegebenen Datentypen berechnete Daten enthält;

(f) Übertragung des Schattierungs-Muster-Objekts zum Schattierungsobjektes zum Aufruf der Mitgliedsfunktion des Schattierungsobjektes (ComputeShade()) mit den Daten der vorgegebenen Datentypen;

(g) Verwenden des Bilderzeugungsobjekts zur Erzeugung des Bildes mit der resultierenden Farbe (fResultantColor).

2. Ein Verfahren nach Anspruch 1, worin das besagte Bild eine Anzahl von Oberflächen (A, B) enthält, von denen einige nicht anzeigbar sind, und worin die Schritte (d) bis (g) für jede darstellbare Oberfläche ausgeführt werden.

3. Ein Verfahren nach Anspruch 1, worin Schritt (g) einen Schritt der Interpolation der resultierenden Farbe (fResultantColor) über wenigstens eine Oberfläche enthält.

4. Ein Verfahren nach Anspruch 1, worin der Gegenstand eine innere Oberfläche und eine äußere Oberfläche enthält, gekennzeichnet durch Erzeugung unterschiedlicher Typen von Schattierungsobjekten, von denen ein Typ (AdoptInsideShader) der inneren Oberfläche und ein anderer Type (AdoptOutsideShader) der äußeren Oberfläche zugeordnet ist und Bestimmung in Abhängigkeit von den Modelldaten, ob eine innere Oberfläche oder eine äußere Oberfläche anzeigbar ist, und Auswahl eines zugeordneten Schattierungsobjekts, so daß das Schattierungs-Muster-Objekt (TShadingSample) zum ausgewählten Schattierungsobjekt übertragen wird.

5. Ein Verfahren nach Anspruch 1, weiter enthaltend die Schritte der Erzeugung einer Vielzahl von Schattierungsobjekten und Anordnung der Schattierungsobjekte in einer Pipeline von Schattierungsobjekten, die ein zusammengesetztes Schattierungsobjekt (Pipeline) bildet, worin jedes Schattierungsobjekt der Pipeline eine Mitgliedsfunktion (ComputeShade()) enthält, die in Abhängigkeit von den Modelldaten im Schattierungs-Muster-Objekt (TShadingSample) zur Bestimmung der Schattierungsinformation dient in Übereinstimmung mit einer entsprechenden Schattierungsberechnung.

6. Das Verfahren nach Anspruch 1 und 5, worin der Schritt (d) einen Schritt der Ausgabe einer Erhalten-Anforderung an das zusammengesetzte Schattierungsobjekt (Pipeline) enthält zum Auffinden der vorgegebenen Datentypen, die von jedem der Schattierungsobjekte in der Pipeline benötigt werden.

7. Eine Einrichtung zur Anzeige eines Farbbildes von einem dreidimensionalen Gegenstand, von dem wenigstens eine Oberfläche auf einer hochauflösenden (14) Anzeigevorrichtung angezeigt wird, mit einem Mehrzweck-Computer (12) und einem objekt-orientierten Betriebssystem, mit einem Speicher, in dem ein objekt-orientierter Schattierungsrahmen gespeichert ist, und mit einer Anzeigevorrichtung des besagten Bildes, wobei das Bild aus Modelldaten erzeugt wird, die wenigstens eine Oberfläche des besagten Gegenstandes und Informationen einer Lichtquelle darstellen,
gekennzeichnet durch:

(a) ein Schattierungsobjekt (TShader), das Mittel aufweist, die auf Daten eines vorgegebenen Datentypen und auf die Informationen einer Lichtquelle ansprechen zur Berechnung einer resultierenden Farbe (fResultantColor);

(b) ein Bilderzeugungsobjekt enthaltende Mittel zur Ausgabe einer Erhalten-Anforderung (GetshadingUsageVariables()) vom Bilderzeugungsobjekt an das Schattierungsobjekt zum Auffinden der vorgegebenen Datentypen, die vom Schattierungsobjekt zur Durchführung der Farbberechnung benötigt werden;

(c) Mittel, die auf die aufgefundenen, vorgegebenen und die Modelldaten ansprechen zur Erzeugung eines Schattierungs-Muster-Objekts (TShadingSample), das aus den Modelldaten der vorgegebenen Datentypen berechnete Daten enthält und zur Übertragung des Schattierungs-Muster-Objekts zum Schattierungsobjektes zur Bereitstellung der Daten der vorgegebenen Datentypen;

(g) Mittel, die auf die Modelldaten und die resultierende Farbe ansprechen und das Bild erzeugen.

8. Einrichtung nach Anspruch 7, worin das besagte Bild eine Anzahl von Oberflächen (A, B) enthält, von denen einige nicht anzeigbar sind, gekennzeichnet durch die Anwendung der Mittel zur Ausgabe einer Erhalten-Anforderung, der Mittel zur Erzeugung eines Schattierungs-Muster-Objekts und der Bilderzeugungsmittel auf jede der anzeigbaren Oberflächen.

9. Einrichtung nach Anspruch 7, worin die Bilderzeugungsmittel Mittel zur Interpolation der resultierenden Farbe (fResultantColor) über wenigstens eine Oberfläche enthalten.

10. Einrichtung nach Anspruch 7, worin der Gegenstand eine innere Oberfläche und eine äußere Oberfläche enthält, gekennzeichnet durch Mittel zur Erzeugung unterschiedlicher Typen von Schattierungsobjekten, von denen ein Typ (AdoptInsideShader) der inneren Oberfläche und ein anderer Type (AdoptOutsideShader) der äußeren Oberfläche zugeordnet ist, Mittel zur Bestimmung in Abhängigkeit von den Modelldaten, ob eine innere Oberfläche oder eine äußere Oberfläche anzeigbar ist, zur Auswahl eines zugeordneten Schattierungsobjekts, so daß das Schattierungs-Muster-Objekt (TShadingSample) zum ausgewählten Schattierungsobjekt übertragen wird.

11. Einrichtung nach Anspruch 7, weiter enthaltend Mittel der Erzeugung einer Vielzahl von Schattierungsobjekten und zur Anordnung der Schattierungsobjekte in einer Pipeline von Schattierungsobjekten, die ein zusammengesetztes Schattierungsobjekt (Pipeline) bildet, worin jedes Schattierungsobjekt der Pipeline eine Mitgliedsfunktion (ComputeShade()) enthält, die in Abhängigkeit von den Modelldaten im Schattierungs-Muster-Objekt (TShadingSample) zur Bestimmung der Schattierungsinformation dient, in Übereinstimmung mit einer entsprechenden Schattierungsberechnung zur Erzeugung der Farbinformation (fResultantColor).

12. Einrichtung nach Anspruch 7 und 11, worin besagte Mittel zur Ausgabe einer Anforderung (GetShadingUsageVariables()) vom Bilderzeugungsobjekt an das Schattierungsobjekt Mittel enthalten zur Ausgabe einer Erhalten-Anforderung an das zusammengesetzte Schattierungsobjekt (Pipeline) enthält zum Auffinden der vorgegebenen Datentypen, die von jedem der Schattierungsobjekte in der Pipeline benötigt werden.

13. Einrichtung nach Anspruch 7, worin die Mittel zur Erzeugung eines Schattierungs-Muster-Objekts Mittel enthalten zur Berechnung von Daten eines vorbestimmten Datentypen aus den Modelldaten.

14. Einrichtung nach Anspruch 11, worin die Vielzahl von Schattierungsobjekten modular und untereinander frei austauschbar in der Pipeline-Anordnung enthalten sind.

**Revendications**

1. Méthode d'affichage d'une image couleurs d'un article en trois dimensions présentant au moins une surface sur un affichage haute résolution (14) utilisant un ordinateur universel (12) et un système d'exploitation orienté objet avec une mémoire ayant une structure d'ombrage orienté objet comprenant les étapes de :

   a) afficher une image dudit article en trois dimensions avec l'image étant produite à partir de données modèles représentant au moins ladite surface et des informations de source lumineuse,
   b) créer un objet d'ombrage (Tshader) ayant une fonction pour calculer la couleur à partir de données présentant des types de données prédéfinis, et à partir des informations de source lumineuse,

   caractérisée par

   c) créer un objet d'obtention pour recevoir les données modèles,
   d) délivrer une requête d'obtention (GetShadingUsageVariables) à partir de l'objet d'obtention à l'objet d'ombrage de façon à rechercher les types de données prédéfinis exigés par l'objet d'obtention pour effectuer le calcul de couleur,
   e) utiliser les types de données prédéfinis recherchés dans l'objet d'obtention pour créer un objet échantillon d'ombrage (TShadingSample) contenant des données calculées à partir des données modèles ayant les types de données prédéfinis,
   f) transmettre l'objet échantillon d'ombrage à l'objet d'ombrage pour invoquer la fonction de l'objet d'ombrage (ComputerShade) avec les données ayant les types de données prédéfinis,
   g) utiliser l'objet d'obtention pour obtenir l'image avec la couleur résultante (fResultantColor).

2. Méthode telle que définie dans la revendication 1, dans laquelle ladite image comprend une pluralité de surfaces (A, B) dont certaines ne sont pas affichables, et dans laquelle les étapes d) à g) sont effectuées pour chacune des surfaces affichables.

3. Méthode telle que définie dans la revendication 1, dans laquelle l'étape g) comprend l'étape d'interpoler la couleur résultante (fResultantColor) sur au moins une surface.

4. Méthode telle que définie dans la revendication 1, dans laquelle l'article a une surface intérieure et une surface extérieure, caractérisée en ce qu'on crée différents types d'objets d'ombrage, un type (AdoptInsideShader) affecté à la surface intérieure et l'autre type (AdoptOutsideShader) affecté à la surface extérieure, on détermine en réponse aux données modèles si une surface intérieure ou une surface extérieure doit être affichée et on sélectionne un objet d'ombrage affecté de sorte que l'objet échantillon d'ombrage (TShadingSample) est transmis à l'objet d'ombrage sélectionné.

5. Méthode telle que définie dans la revendication 1, comprenant en outre les étapes de créer une pluralité d'objets d'ombrage dans un pipeline d'objets d'ombrage pour former un objet d'ombrage composé (Pipeline), dans laquelle chaque objet d'ombrage du pipeline comprend une fonction (ComputerShade) sensible aux données modèles dans l'objet échantillon d'ombrage (TShadingSample) pour déterminer des informations d'ombrage conformes au calcul d'ombrage correspondant.

6. Méthode telle que définie dans les revendications 1 et 5, dans laquelle l'étape d) comprend l'étape de délivrer la requête d'obtention à l'objet d'ombrage composé (Pipeline) pour rechercher des types de données prédéfinis exigés par chacun des objets d'ombrage dans le pipeline.

7. Appareil d'affichage d'une image couleurs d'un article en trois dimensions présentant au moins une surface sur un affichage haute résolution (14) comprenant un ordinateur universel (12) ayant un système d'exploitation orienté objet, une mémoire ayant une structure d'ombrage orienté objet, et des moyens d'affichage de ladite image, celle-ci étant obtenue à partir de données modèles représentant au moins ladite surface dudit article et des informations de source lumineuse,
caractérisé par

a) un objet d'ombrage (Tshader) comprenant des moyens sensibles aux données ayant des types de données prédéfinis et aux informations de source lumineuse pour calculer une couleur résultante (fResultantColor),
b) un objet d'obtention comprenant des moyens pour délivrer une requête d'obtention (GetShadingUsageVariables) à partir de l'objet d'obtention à l'objet d'ombrage de façon à rechercher les types de données prédéfinis exigés par l'objet d'obtention pour effectuer le calcul de couleur,
c) des moyens sensibles aux types de données prédéfinis et aux données modèles pour créer un objet échantillon d'ombrage (TShadingSample) contenant des données calculées à partir des données modèles ayant les types de données prédéfinis, et pour transmettre l'objet échantillon d'ombrage à l'objet d'ombrage pour fournir les données ayant les types de données prédéfinis,
d) des moyens sensibles aux données modèles et à la couleur résultante pour obtenir l'image.

8. Appareil tel que défini dans la revendication 7, dans lequel l'image comprend une pluralité de surfaces (A, B) dont certaines ne sont pas affichables, caractérisé par l'application des moyens pour délivrer, des moyens pour créer et des moyens pour obtenir à chacune des surfaces affichables.

9. Appareil tel que défini dans la revendication 7, dans lequel les moyens pour obtenir comprennent en outre des moyens d'interpolation pour interpoler la couleur résultante (fResultantColor) sur au moins une surface.

10. Appareil tel que défini dans la revendication 7, dans lequel l'article a une surface intérieure et une surface extérieure, caractérisé par des moyens pour créer différents types d'objets d'ombrage, un type (AdoptInsideShader) affecté à la surface intérieure et l'autre type (AdoptOutsideShader) affecté à la surface extérieure, des moyens pour déterminer en réponse aux données modèles si une surface intérieure ou une surface extérieure doit être affichée et pour sélectionner un objet d'ombrage affecté de sorte que l'objet échantillon d'ombrage (TShadingSample) est transmis à l'objet d'ombrage sélectionné.

11. Appareil tel que défini dans la revendication 7, comprenant en outre des moyens pour créer une pluralité d'objets d'ombrage dans un pipeline d'objets d'ombrage pour former un objet d'ombrage composé (Pipeline), dans laquelle chaque objet d'ombrage du pipeline comprend une fonction (ComputerShade) sensible aux données modèles dans l'objet échantillon d'ombrage (TShadingSample) pour déterminer des informations d'ombrage conformes au calcul d'ombrage correspondant, de façon à générer les informations de couleur ( fResultantcolor).

12. Appareil tel que défini dans les revendications 7 et 11, dans lequel lesdits moyens pour délivrer une requête (GetShadingUsageVariables) à partir de l'objet d'obtention à l'objet d'ombrage comprennent des moyens pour délivrer une requête d'obtention à l'objet d'ombrage composé (Pipeline) de façon à rechercher des types de données prédéfinis exigés par chacun des objets d'ombrage dans le pipeline.

13. Appareil tel que défini dans la revendication 7, dans lequel les moyens de création d'objet échantillon d'ombrage comprennent des moyens pour calculer les types de données prédéfinis à partir des données modèles.

14. Appareil tel que défini dans la revendication 11, dans lequel la pluralité d'objets d'ombrage sont modulaires et librement interchangeables entre eux dans l'arrangement de pipeline.

10

14

12

16

FIGURE 1

18

FIGURE 2

GrafBundle 3D

Inside Surface Color
Outside Surface Color

Inside Shader
Outside Shader

Shading Resolution Option
Shading Interpolation Option
Backface Culling Option
Texture Mapping Matrix

Figure 3

Inside Surface

Outside
Surface

Camera ● Normal

Front Facing

Back Facing

Normal

3
2
4
1
5
0

Right-hand rule to determine the
direction of the normal and the inside
or the outside surface. If a surface is
presented by 0-1-2-3-4-5, it is an
outside surface.

Figure 4

RGB color cube    HSV hexcone    HSL double cone    Spectral reflectance curve

Figure  5

Figure 7

EP 0 698 259 B1

Figure 6

Figure 8

| $K_a$ | = Ambient reflection coefficient. |
|---|---|
| $K_d$ | = Diffuse reflection coefficient. |
| $K_s$ | = Specular reflection coefficient. |
| $S_{exp}$ | = Specular concentration exponent |
| OC | = Object color |
| LC | = Light Color |
| $L_{exp}$ | = Light concentration exponent(mainly for spot light objects) |
| $L_{att}$ | = Light attenuation factor based on the distance between the light and the point |
| N | = Surface normal |
| L | = Light vector |
| LO | = Vector from the light to an object |
| R | = Light reflection vector |
| V | = Camera vector from the camera to a surface point |

Figure 9

TLight

ComputeDiffuse() = 0
ComputeSpecular() = 0
ComputeIntensity() = 0

TPointLight    TVectorLight    TSpotLight

Figure 10

Ka

Mult

Ambient()

Add

Kd

Mult

Diffuse()

Mult

Object Color

Add — Result

Ks

Mult

Specular()

Figure 11

Figure 12

Figure 13

(0,1) (1,1)

Screen

(0,1)

(1,1)

(1,0)

A

B

(0,0)

A

B

(0,0) (1,0)

A surface rendered on a screen

UV boundaries on a surface
corresponding to pixels

Texture boundaries
corresponding to pixels

Figure 14

Two texture areas are
approximated by rectangles

Two texture areas are
approximated by squares

Figure 15

Figure 16

Figure 17

Figure 18

Figure 19

Figure 20

Figure 21

Figure 22

Figure 23

EP 0 698 259 B1

Figure 24

41

Figure 25

Figure 26